# EUROPEAN PATENT APPLICATION

(11) **EP 4 015 129 A1**
(43) Date of publication of application: **22.06.2022**
(21) Application number: 20020622.5
(22) Date of filing: 16.12.2020
(51) Int. Cl.: B23K 9/16, B23K 9/32, B23K 10/00

(54) **MODULAR TRAILING NOZZLE SYSTEM FOR A WELDING TORCH**

(71) Applicant: Linde GmbH, 82049 Pullach (DE)
(72) Inventor: Siewert, Erwan, 85283 Niederlauterbach (DE); Pfreuntner, Michael, 85716 Unterschleißheim (DE)
(74) Representative: Lu, Jing

(57) **Abstract**

The present invention relates to a trailing gas nozzle (1) for a welding torch, comprising an elongated body (10) comprising an internal space (11) for receiving a trailing gas (G), and an elongated discharge area (12) on a bottom side of the body (10) for discharging the trailing gas (G) onto a weld seam. The body (10) is bendable or comprises a plurality of segments (101, 102, 103) connected to one another in a movable fashion or via angled contact surfaces so that a curvature of the discharge area (12) is adjustable to a desired curvature.

## Description

The present invention relates to a gas nozzle for a welding torch that allows to cover an elongated, often curved section of a weld seam that has just being welded with a trailing gas.

Such gas nozzles are also denoted as trailing nozzles, since they follow the arc or weld pool in the welding direction. Particularly, US5393949A and WO2018073293A2 disclose trailing nozzles having a curved discharge area for discharging a gas to protect a weld seam. However, when welding tubes in a peripheral direction for instance, only a fixed diameter range can be covered with such a nozzle. This means that many different trailing gas nozzles are required for different tube diameters.

The problem to be solved by the present invention therefore is to provide a gas nozzle for discharging a trailing gas onto a weld seam that is improved regarding the above-stated disadvantage.

This problem is solved by a gas nozzle having the features of claim 1. Preferred embodiments are stated in the corresponding sub claims and are described below.

According to claim 1, a gas nozzle for a welding torch is disclosed, comprising:
- an elongated body comprising an internal space for receiving a trailing gas, and an elongated discharge area on a bottom side of the body for discharging the trailing gas onto a weld seam.

According to the present invention, for adjusting a curvature of the elongated discharge area to a desired curvature corresponding to a curvature of a weld seam to be welded, the elongated body is bendable or comprises a plurality of segments connected to one another (e.g. either in a movable fashion or rigidly). Thus, the discharge area can conform to the course of a section of a weld seam that has just been welded with the welding torch to which the gas nozzle is attached and can therefore be covered by the trailing gas in a uniform and efficient manner. Besides the trailing gas, the welding torch itself can discharge a gas for protecting the weld pool and weld seam, which gas is denoted as shielding gas to distinguish the latter from the trailing gas. However, shielding and trailing gas can have the same composition although it is also possible that the compositions differ.

The invention allows one to protect straight as well as curved weld seams during the welding process with only one gas nozzle that is - due to its segments or due to the bendable body - adaptable to the desired welding task. Due to the fact that the discharge area can be curved in a variable manner, the discharge area can assume a form that ensures that the discharge area essentially comprises a constant distance (normal to the discharge area) with respect to the curved weld seam. Thus, the weld seam can be covered with the trailing gas in a uniform manner.

According to an embodiment of the present invention, at least one segment of said plurality of segments comprises a gas inlet for feeding trailing gas into the internal space of the body that can then be discharged via said curvature-adjustable discharge area of the gas nozzle.

Furthermore, each segment can have its own gas inlet. In case said at least one segment comprise a single gas inlet, the other segments can be configured to distribute the trailing gas along the length of the body of the gas nozzle through its internal space. Particularly for precise guiding of the trailing gas through the internal space each segment can comprise a gas distributor.

According to an embodiment of the present invention, the body of the gas nozzle comprises a first segment configured to be arranged adjacent the welding torch and configured to be connected to the welding torch. The gas nozzle may be connected to the welding torch using fasteners such as quick release clamps and similar fasteners that are preferably releasable without the need of using a tool. Other suitable fastening means are also conceivable. Preferably, said gas inlet is arranged on the first segment. Furthermore, according to an embodiment, the first segment of the gas nozzle can comprise an opening for receiving the torch, particularly in a form-fitting manner, for mounting the torch to the first segment of the gas nozzle. Particularly, the welding torch can be integrated into the gas nozzle, particularly into the first segment, wherein preferably the welding torch does not comprise a separate shielding gas nozzle, but particularly uses the gas nozzle for providing the entire trailing/shielding gas needed to cover the weld seam.

Further, according to an embodiment of the present invention, at least one segment of said plurality of segments comprises a conduit configured to receiving a cooling fluid for cooling the at least one segment. Particularly, said at least one segment to be cooled is the first segment of the gas nozzle that is configured to be arranged adjacent the welding torch and connected to the welding torch. The first segment in the vicinity of the welding torch is arranged closest to the arc and the heat generated by the latter so that cooling of at least the first segment of the body of the gas nozzle can be useful for protecting the gas nozzle from excessive heat.

Furthermore, each segment can comprise a conduit for receiving a cooling fluid. The conduits can be in fluid connection so that the cooling fluid can be passed from one segment to a neighbouring segment of the body of the gas nozzle.

According to yet another embodiment of the present invention, the first segment of the body of the gas nozzle consists out of or comprises a heat resistant material (e.g. a metal or a ceramics). Alternatively, or in addition, the first segment can comprise a heat absorber for absorbing heat generated by the arc of the welding torch. Preferably, the heat absorber is positioned to absorb most of the arc energy, wherein it is particularly located at a position where hot plasma reflected from the workpiece hits the gas nozzle.

Furthermore, according to an embodiment of the present invention, the body or at least one segment of said plurality of segments comprises a gas distributor. Particularly, several of said plurality of segments can comprise a gas distributor, particularly a first segment, a middle segment, and a last segment of said plurality of segments. Furthermore, each segment of said plurality of segments can comprise a gas distributor. Further, each segment can comprise a channel, particularly a channel integrated into a wall of the respective segment to establish a flow connection between the gas distributors. Particularly, in an embodiment, the gas nozzle can comprise e.g. up to five middle segments (i.e. segments between the first and the last segment). Each middle segment can comprise a gas distributor.

According to an embodiment, the respective gas distributor comprises or is formed out of a porous material. Particularly, the porous material can be a sintered material. Particularly, sinter bronze or brass can be used.

According to a further embodiment, the gas distributor(s) can be formed by a perforated hose that extends through the segments of the body of the gas nozzle along the discharge area.

In an embodiment, the hose comprises an inlet at a first end of the hose for pressurizing the hose with a trailing gas and a sealed second end (the second end can be closed with a blind plug for instance). According to an alternative embodiment, the hose comprises an inlet in an intermediary section of the hose arranged between a first end and an opposing second end of the hose, wherein the first and the second end are sealed, e.g. by a blind plug, respectively. Particularly, the length of the hose is adapted to the number of segments of the body of the gas nozzle.

Furthermore, according to an embodiment, each segment is releasably connected to its neighbouring segment(s), particularly by means of a screwed connection or a snap-in connection. The first segment at a proximal end of the body and an end segment of the body at a distal end of the body of the gas nozzle only comprise a single neighbouring segment.

Furthermore, according to an embodiment of the present invention, each segment comprises a top wall and two opposing lateral walls and an outflow area arranged between the lateral walls and facing the top wall, so that the trailing gas can be discharged through the outflow area, wherein the outflow areas together form said discharge area of the body of the gas nozzle.

Preferably, according to an embodiment, each outflow area is covered by a flexible sheet comprising a plurality of discharge openings, the respective sheet being particularly configured for braking and homogenizing a gas flow of the trailing gas discharged through the respective outflow area/discharge openings. Particularly, the respective sheet can be a metallic screen or a perforated plate. Particularly, the respective sheet is thin and flexible so that it easily adapts to the angular positions of the segments and allows the discharge area to assume a desired curvature to conform to the workpiece / curvature of the weld seam. Alternatively, the outflow areas, i.e. the discharge area, can be covered by a single flexible sheet of the afore-mentioned kind. According to a preferred embodiment, each segment following the first segment is configured to be adjustable (particularly pivotable) regarding its angular position relative to the previous segment in at least one direction, preferably in two linear independent directions, particularly by an angle of up to 42° per direction (with respect to a longitudinal axis or central axis of the considered segments). In other words, each two neighbouring segments can be pivotably connected to one another to allow pivoting with respect to one another, preferably in three dimensions. This means in particular that each two neighbouring segments can be arranged at an angle with respect to one another allowing to adjust a curvature of the discharge area that is formed by the individual outflow areas of the segments.

According to an embodiment, particularly in case the segments are pivotably connected to one another, all segments except for the first segment and the end segment of the body that forms an end of the body can be geometrically identical. This is beneficial since a desired number of intermediary segments can be inserted between the first and the end segment so that the body of the gas nozzle cannot only be adapted regarding the curvature of the discharge area but also regarding the overall length of the body of the gas nozzle by choosing an appropriate number of intermediary segments.

According to yet another preferred embodiment, the segments are not movably connected to one another, but rigidly, wherein preferably each two neighbouring segments contact each other via a contact surface of the respective segment, wherein an angle of each contact surface with respect to a center axis of the corresponding segment is selected such that the discharge area comprises said desired curvature. Particularly, each segment following the first segment can comprise the shape of a truncated wedge such that a curved discharge area of the body of the gas nozzle results when the segments are mounted to one another. Here, by providing a plurality of segments to choose from, the discharge area of the body can be given the desired curvature by selecting corresponding segments having contact surfaces with appropriate angles with respect to the center axis of the respective segment.

As described above, the first segment is preferably configured to be connected to a welding torch in a releasable fashion. According to a preferred embodiment, the first segment of the body comprises an opening for receiving the welding torch so that the latter can be mounted to the gas nozzle in a safe and reproducible manner. The remaining segments can be considered as extension segments that allow to prolong the body of the nozzle as needed and to lend the discharge areas a desired course/curvature that is adapted to the workpiece and welding seam to be covered with trailing gas. Particularly, the first segment is also denoted as main segment and is individually adapted to the welding torch geometry or comprises components that allow an adaptation to the welding torch (e.g. such as sealing lips or adapters).

However, the segments can comprise or can be formed out of different materials. Particularly, segments made of metal can be used for welding processes with high temperatures. Particularly, only those segments arranged at a distance to the first segment are made out of a plastic material according to an embodiment. The number of metallic segments used particularly depends on the maximum permissible temperature of the plastic material as well as on the surrounding gas temperature and the radiant energy of the welding process. In an embodiment, the first segment is formed out of a metal or comprises a metal, particularly for heat protection, wherein the end segment is preferably formed out of a plastic material. According to a further embodiment, an intermediary segment arranged between the first segment and the end segment is formed out of a plastic material, too.

According to a further embodiment, the first segment is at least partially transparent for allowing visual inspection of the weld pool upon welding. Particularly, the first segment can be made out of a transparent material (e.g. a glass) or may partially contain such a material (e.g. a glass), so that the visibility of the weld pool is ensured.

According to a further embodiment of the present invention, each two neighbouring segments of the body of the gas nozzle are adjustable in angular position by means of a joint, particularly a ball joint, which joint can be formed by the two neighbouring segments or which joint is arranged between the two neighbouring segments. Alternatively, the adjustment of the angular positions can be achieved by means of wedge-shaped adapter plates.

If a joint is used, the tightness between the segments is preferably ensured by inserting a sealing between the segments or by having a pressure drop across a gap between each two neighbouring segments that is higher than across the discharge area.

For processes with strong evaporation or spattering, the gas nozzle can comprise a protective plate (perforated plate) that is placed on the first segment in front of the gas distributor, particularly hose.

Furthermore, the gas nozzle can comprise cooling segments that are used for cooling workpieces that heat up particularly strongly during welding. These cooling segments reduce the workpiece temperature below a critical value. The individual cooling segments can also be adjusted in any spatial direction (e.g. by means of a joint such as a ball joint).

According to an embodiment of the gas nozzle, the gas nozzle is configured to discharge a trailing gas through the discharge area having a gas flow rate in the range between 2 I/min and 20 I/min per segment. The trailing gas can be one of or can comprise a mixture of: Argon, helium, nitrogen, hydrogen.

Yet another aspect of the present invention relates to a method for welding, wherein a gas nozzle according to the present invention is connected to the welding torch, wherein a curvature of the discharge area of the gas nozzle is adjusted to a desired curvature adapted corresponding to a curvature of a weld seam that is to be welded, by one of:
- adjusting the angular position of segments of the body of the gas nozzle;
- releasably connecting segments to one another, wherein each two neighbouring segments contact each other via a contact surface of the respective segment, an angle of each contact surface with respect to a center axis of the corresponding segment being selected such that the discharge area comprises the desired curvature;
- bending the deformable body so that the discharge area comprises said desired curvature.

Particularly, after having configured the gas nozzle to have the desired curvature, the weld seam is welded and the gas nozzle is used to discharge a trailing gas onto the weld seam.

Further, according to an embodiment of the method, a trailing gas is discharged through the discharge area of the body of the nozzle having a gas flow rate in the range between 2 I/min and 20 I/min per segment. The trailing gas can be one of or comprise a mixture of: Argon, helium, nitrogen, hydrogen.

In the following, embodiments of the present invention as well as further features and advantages of the present invention are described with reference to the Figures, wherein
- Fig. 1: shows a perspective view of an embodiment of a gas nozzle according to the present invention,
- Fig. 2: shows a top view onto the gas nozzle shown in Fig. 1,
- Fig. 3: shows a lateral view of the gas nozzle shown in Figs. 1 and 2,
- Fig. 4: shows another lateral view of the gas nozzle shown in Figs. 1 to 3, and
- Fig. 5: shows a schematical lateral view of a further embodiment of a gas nozzle according to the present invention.

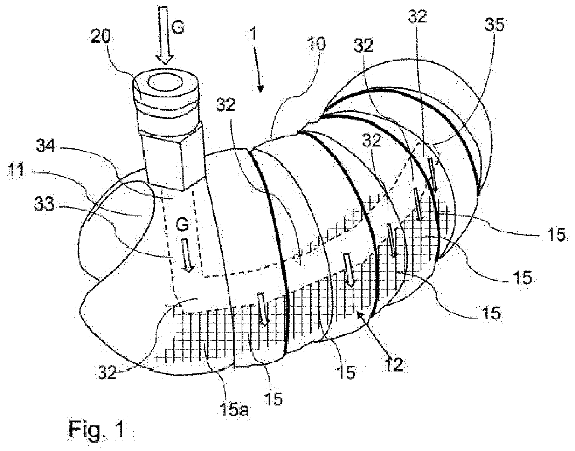

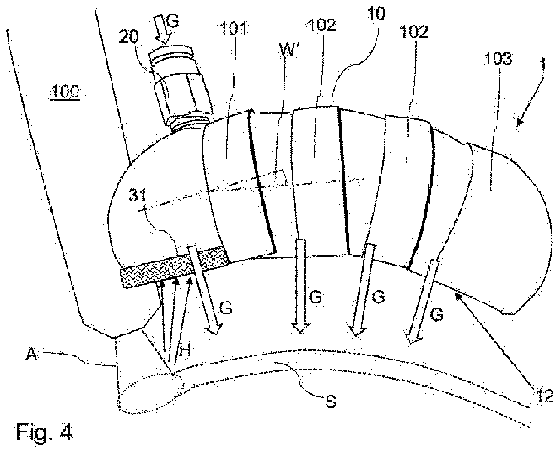

Fig. 1 shows a perspective view of an embodiment of a gas nozzle 1 for a welding torch 100 according to the present invention. The gas nozzle 1 comprises an elongated body 10 comprising an internal space 11 for receiving a trailing gas G, and an elongated discharge area 12 on a bottom side of the body 10 for discharging the trailing gas G onto a weld seam S (cf. e.g. Fig. 4). The body 10 comprises a plurality of segments 101, 102, 103 connected to one another in a movable fashion so that a shape, particularly curvature of the discharge area 12 is adjustable.

Particularly, Figs. 1, 2 and 4 indicate that the discharge area 12 that is formed by the combined outflow areas 15 of the segments 101, 102, 103 of the body 10 of the gas nozzle 1 can be adapted to the shape of a welding seam S to be welded. This particularly applies to all embodiments of the present invention. Further, this feature is particularly useful when welding tubes of different diameter so that the same nozzle 1 can be used by merely adjusting the curvature of the discharge area 12 when using the nozzle 1 on tubes that comprise a different diameter than the ones welded before. Of course, also parts other than tubes can be welded using the gas nozzle 1 according to the present invention. As can be seen from Fig. 4, the possibility to adapt the curvature / shape of the discharge area 12 of the nozzle 1 allows to configure the nozzle 1 in a way that the discharge area 12 can be positioned with respect to the weld seam S such that it comprises essentially a constant distance to the weld seam S over the length of the body 10 of the nozzle 1 along the weld seam S. This allows to efficiently cover the weld seam S with a trailing gas G which greatly improves protection of the weld seam S upon welding.

Due to the fact that the body 10 consists out of segments 101, 102, 103 (alternatively the body can be a deformable hose) the gas nozzle 1 is a modular gas nozzle 1 that can be lengthened / shortened and oriented in space with respect to the curved weld seam S as the shape of the weld seam / workpiece to be welded demands.

Particularly, the segments 101, 102, 103 are quickly adaptable to the desired component/weld seam geometry which allows considerable savings in set-up time. Furthermore, only simple tools such as an allen key or no tools at all are required for the adjustment.

Moreover, the design according to the present invention is flexible and works with all kind of welding torches. Particularly, the gas nozzle 1 according to the present invention can be used with standard TIG, Plasma and MSG welding torches.

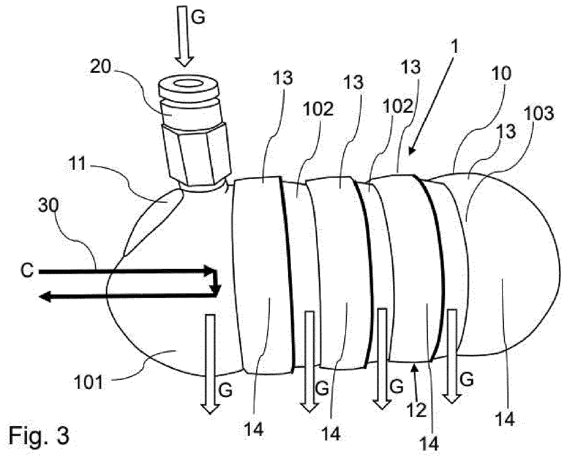

As indicated in Fig. 1, the gas nozzle 1 comprises a gas inlet 20 positioned particularly on a first segment 101 of the body 10 of the nozzle 1 for feeding the trailing gas G into the internal space 11 of the body 10. As indicated in Fig. 3 with respect to the first segment 101 as an example, selected segments 101, 102, 103 can comprise a conduit 30 configured to receive a cooling fluid C for cooling the respective segment.

As indicated in Figs. 4, the first segment 101 of the body 10 of the nozzle 1 is configured to be arranged adjacent a welding torch 100 and connected to the latter by means of a releasable fasting means (not shown). Other suitable fastening means may also be used. Particularly, due to the fact that the first segment 101 is positioned close to the arc A generated with the torch 100 during welding it preferably consists out of a heat resistant material and/or may comprise a heat absorber 31 for absorbing heat H generated by the arc A.

As shown in Fig. 1, each segment 101, 102, 103 preferably comprises a gas distributor 32 that can be formed e.g. by a perforated hose 33 that extends between the segments 101, 102, 103 along the discharge area 12 of the body 10 in the internal space 11 of the gas nozzle 1.

The hose 33 can comprise an inlet 34 at a first end of the hose 33 for feeding trailing gas into the hose 33 and a sealed second end 35. Particularly, the hose 33 extends through the internal space 11 of the body 10 of nozzle 1 from one segment 101, 102 to the next segment 102, 103 and comprises multiple openings through which trailing gas G can leave the hose 33 to be discharged through the discharge area 12 of the nozzle 1.

Furthermore, each segment 101, 102, 103 that forms the elongated adjustable body 10 of the nozzle 1 comprises a top wall 13 and two opposing lateral walls 14 and an outflow area 15 arranged between the lateral walls 14 and facing the top wall 13 (cf. e.g. Figs. 1 to 2), so that the trailing gas G can be discharged through the outflow area 15 or the respective segment onto the welded weld seam 4 (cf. Fig. 4) wherein the outflow areas 15 together form said discharge area 12 of the body 10 of the gas nozzle 1. Particularly, each outflow area 15 can be covered by a flexible sheet 15 comprising a plurality of discharge openings 15a for discharging the trailing gas G (cf. Fig. 1). Alternatively, a single flexible sheet 15 can cover all outflow areas 15 / the discharge area 12.

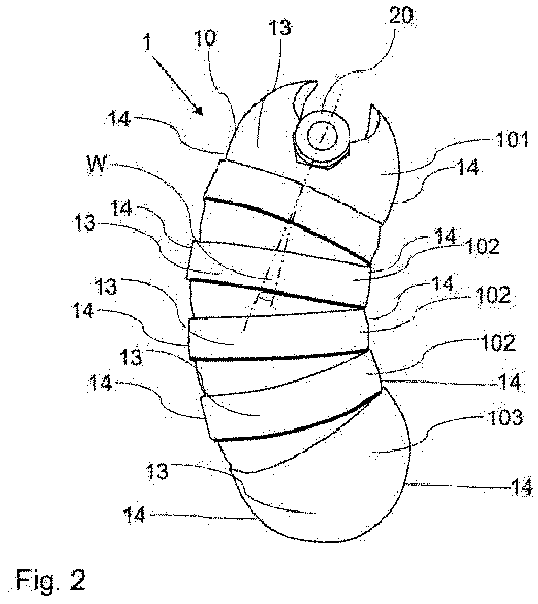

In order to be able to efficiently adapt the shape of the discharge area 12 of the body 10 of the gas nozzle 1 to the weld seam S, each segment 102, 103 following the first segment 101 is preferably configured to be adjustable regarding its angular position relative to the previous segment 101, 102. Particularly, each two neighbouring segments 101, 102; 102, 102; 102, 103 can be arranged at an angle W with respect to one another allowing to adjust a curvature of the discharge area 12 that is formed by the individual outflow areas 15 of the segments 101, 102, 103. Fig. 2 shows this adjustment in a horizontal plane where the first segment 101 is arranged at an angle W with respect to the following segment 102. This adjustment is also possible in a vertical plane, as shown in Fig. 4 where the first segment 101 is arranged at an angle W' with respect to the following segment 102.

As indicated in Figs. 1 to 4, the angular position of the segments is adjustable by providing a joint between each to neighbouring segments 101, 102; 102, 102; 102, 103. Such a joint can be formed by inserting an end of a segment (e.g. 102) into the previous segment (e.g. 101) such that the two segments 101, 102 contact each other via surfaces that can slide with respect to one another to allow for the adjustment of the angular position. For this, the surfaces sliding along one another can have a spherical curvature. Optionally, a sealing means can be positioned between these surfaces. Other joints are also conceivable.

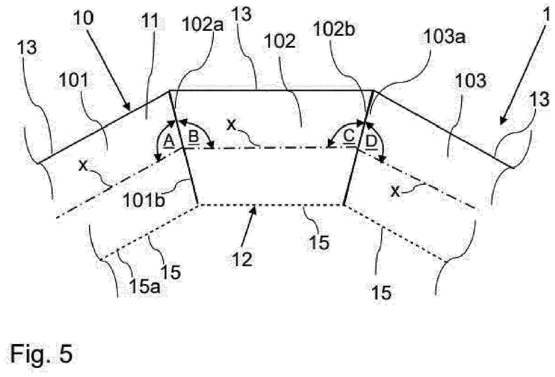

According to an alternative embodiment shown in Fig. 5, each two neighbouring segments 101, 102; 102, 103 of the body 10 of the gas nozzle 1 contact each other via a contact surface 101b, 102a; 102b, 103a of the respective segment 101, 102, 103, wherein an angle A, B, C, D of each contact surface 101b, 102a, 102b, 103a with respect to a center axis x of the corresponding segment 101, 102, 103 is selected such that the discharge area 12 comprises said desired curvature. In this embodiment, the gas nozzle 1 can be a modular system, comprising a plurality of different segments 101, 102, 103 out of which a particular number of segments are chosen that comprise contact surfaces with angles that result in the desired curvature of the discharge area 12 once the segments are mounted to one another such that the contact surfaces 101b, 102a; 102b, 103a contact one another as shown in Fig. 5. Particularly, the angles A and D of the first segment and the last segment can also be 90°. Fig. 5 merely shows one middle segment 102 between the first and the last segment, but the gas nozzle 1 can comprise several middle segments, e.g. four such middle segments 102. In an embodiment, the angles A and D can be 90° while the angles of the middle segments can differ from 90° and can assume e.g. up to 90°±42°. Other values are also conceivable.

Particularly, the segments 101, 102, 103 can be mounted to one another by means of screws. The other components such as e.g. the gas distributor(s) 32, the gas inlet 20, and the flexible sheet 15 for covering the discharge area 12 can be formed according to embodiments described herein. Particularly, the body 10 can comprise a gas distributor in the first segment 101, in a middle segment 102 and in a last segment 103 of the body 10. Particularly, in the above example of four middle segments 102, every such middle segment can comprise a gas distributor.

Particularly, the distributors can be connected to one another by channels integrated into the respective segment 101, 102, 103. Furthermore, particularly, the first segment 101 can be configured to receive the welding torch so that the welding torch can be mounted to the first segment 101. For this, the first segment 101 can comprises a corresponding interface, e.g. an opening for accommodating the torch in a form-fitting manner. Furthermore, the welding torch can be integrated into the gas nozzle 1, particularly into the first segment 101. In such a case, the welding torch does not need to have a separate shielding gas nozzle.

## Claims

1. A gas nozzle (1) for a welding torch (100), comprising:
- an elongated body (10) comprising an internal space (11) for receiving a trailing gas (G), and an elongated discharge area (12) on a bottom side of the body (10) for discharging the trailing gas (G) onto a weld seam (S),
**characterized in that**
for adjusting a curvature of the elongated discharge area (12) to a desired curvature, the elongated body (10) is bendable or comprises a plurality of segments (101, 102, 103) connected to one another.

2. The gas nozzle according to claim 1, wherein at least one segment (101) of said plurality of segments comprises a gas inlet (20) for feeding the trailing gas (G) into the internal space (11) of the body (10).

3. The gas nozzle according to one of the preceding claims, wherein at least one segment (101, 102, 103) of said plurality of segments comprises a conduit (30) configured to receive a cooling fluid (C) for cooling the at least one segment (101, 102, 103).

4. The gas nozzle according to one of the preceding claims, wherein the gas nozzle (1) comprises a first segment (101) configured to be arranged adjacent the welding torch (100) and to be connected to the welding torch (100).

5. The gas nozzle according to claim 4, wherein the first segment (101) consists out of a heat resistant material and/or wherein the first segment (101) comprises a heat absorber (31) for absorbing heat (H) generated by an arc (A) generated by the welding torch (100).

6. The gas nozzle according to one of the preceding claims, wherein at least one segment (101, 102, 103) of said plurality of segments comprises a gas distributor (32); or wherein several of said plurality of segments comprise a gas distributor (32), particularly a first segment, a middle segment, and a last segment of said plurality of segments; or wherein all segments of said plurality of segments comprise a gas distributor (32).

7. The gas nozzle according to claim 6, wherein the respective gas distributor (32) comprises a porous material.

8. The gas nozzle according to one of the claims 1 to 6, wherein the gas nozzle comprises a gas distributor (32) being formed by a perforated hose (33) extending through the segments (101, 102, 103) of the body (10) of the gas nozzle (2).

9. The gas nozzle according to one of the preceding claims, wherein each segment (101, 102, 103) of said plurality of segments is releasably connected to its neighbouring segment(s).

10. The gas nozzle according to one of the preceding claims, wherein each segment (101, 102, 103) of said plurality of segments comprises a top wall (13) and two opposing lateral walls (14) and an outflow area (15) arranged between the lateral walls (14) and facing the top wall (13), so that the trailing gas (G) can be discharged through the outflow area (15) in the direction of a workpiece to be welded, wherein the outflow areas (15) together form said discharge area (12) of the body (10) of the gas nozzle (1).

11. The gas nozzle according to claim 10, wherein each outflow area (15) is covered by a flexible sheet (15) comprising a plurality of discharge openings (15a) for discharging the trailing gas (G), or wherein the discharge area (12) is covered by a single flexible sheet (15) comprising a plurality of discharge openings (15a) for discharging the trailing gas (G)

12. The gas nozzle according to one of the preceding claims, wherein each segment (102, 103) following the first segment (101) is configured to be adjustable regarding its angular position relative to the previous segment (101, 102) to adjust the curvature of the discharge area (12) to the desired curvature, wherein particularly each segment following the first segment is movably connected to the previous segment so that its angular position relative to the previous segment is adjustable.

13. The gas nozzle according to one of the preceding claims, wherein all segments (101, 102, 103) except for the first segment (101) and an end segment (103) of the body (10) of the gas nozzle (1) are geometrically identical.

14. The gas nozzle according to one of the claims 1 to 11, wherein each two neighbouring segments (101, 102; 102, 103) contact each other via a contact surface (101b, 102a; 102b; 103a) of the respective segment (101, 102, 103), wherein an angle (A, B, C, D) of each contact surface (101b, 102a, 102b, 103a) with respect to a center axis (x) of the corresponding segment (101, 102, 103) is selected such that the discharge area (12) comprises said desired curvature.

15. A method for welding, wherein a gas nozzle (1) according to one of the preceding claims is connected to a welding torch (100), wherein a curvature of the discharge area (12) of the gas nozzle (1) is adjusted to a desired curvature corresponding to a curvature of a weld seam (S) that is to be welded, by one of:
- adjusting the angular position of segments (102, 103) of the body (10) of the gas nozzle (1);
- releasably connecting segments (101, 102, 103) to one another, wherein each two neighbouring segments (101, 102; 102, 103) contact each other via a contact surface (101b, 102a; 102b; 103a) of the respective segment (101, 102; 102, 103), an angle of each contact surface (A, B, C, D) with respect to a center axis (x) of the corresponding segment (101, 102, 103) being selected such that the discharge area (12) comprises the desired curvature;
- bending the deformable body so that the discharge area comprises said desired curvature.
